# EUROPEAN PATENT SPECIFICATION

(11) **EP 4 129 955 B1**
(45) Date of publication and mention of the grant of the patent: **29.05.2024**
(21) Application number: 21775403.5
(22) Date of filing: 24.03.2021
(51) Int. Cl.: C04B 35/587, C04B 35/596

(54) **CERAMIC PLATE AND METHOD FOR PRODUCING SAME**
KERAMIKPLATTE UND HERSTELLVERFAHREN DAVON
PLAQUE CÉRAMIQUE ET SON PROCÉDÉ DE PRODUCTION

(30) Priority: 26.03.2020 JP 2020055887
(43) Date of publication of application: 08.02.2023
(73) Proprietor: Denka Company Limited, Tokyo 103-8338 (JP)
(72) Inventor: YAMAGATA Toshitaka, Tokyo 103-8338 (JP); YAMAGUCHI Mitsuhiro, Tokyo 103-8338 (JP); HIGASHI Riki, Tokyo 103-8338 (JP)
(74) Representative: Hoffmann Eitle
(86) International application number: PCT/JP2021/012386
(87) International publication number: WO 2021/193762

(56) References cited:
- EP-A1- 1 914 213
- WO-A1-2011/111746
- WO-A1-2011/111746
- WO-A1-2014/051088
- WO-A1-2017/170247
- WO-A1-2017/170247
- WO-A1-2020/045431
- JP-A- H08 510 201
- JP-A- H08 510 201
- JP-A- 2006 096 661

## Description

### Technical Field

The present disclosure relates to a ceramic plate and a method for producing the same.

### Background Art

Silicon nitride is a material excellent in strength, hardness, toughness, heat resistance, corrosion resistance, thermal shock resistance, and the like, and thus silicon nitride is used as a raw material for producing ceramic that is used in various industrial components such as a die-cast machine and a melting furnace, automotive components, and the like. Furthermore, ceramic containing silicon nitride is excellent in mechanical characteristics at a high temperature, and thus this ceramic has been studied to be applied to gas turbines requiring a high-temperature strength and a high-temperature creep property.

From the viewpoint of improving productivity of ceramic, and the like, a method for producing ceramic by sintering a raw material containing silicon nitride and a sintering auxiliary agent has been known. For example, JP H08-048564 A describes a method for producing a silicon nitride sintered body by adding a sintering auxiliary agent such as silicon dioxide to predetermined silicon nitride fine powder and sintering the mixture in a nitrogen atmosphere.

WO 2011/111746 A1 describes a Si₃N₄ plate used for a circuit board and discloses a grain boundary phase consisting of YMg₂SiO₅N, Y₄Si₂O₇N₂ (i.e. Y₈Si₄N₄O₁₄) and Y₂Si₃O₃N₄, but is silent as to the contents of Y₈Si₄N₄O₁₄ and Y₂Si₃O₃N₄.

### Summary of Invention

### Technical Problem

By adding silicon dioxide as a sintering auxiliary agent in sintering of silicon nitride from the outside, sintering can be performed at a low temperature at which a grain growth rate is low, and thus a more uniform ceramic plate can be produced. This tendency is proportionate to an increase in used amount of silicon dioxide. However, as described above, in a ceramic plate obtaining by adding silicon dioxide as an auxiliary agent, expected insulation properties are not exhibited in some cases.

An object of the present disclosure is to provide a ceramic plate excellent in insulation properties and a method for producing the same.

### Solution to Problem

An aspect of the present invention is a ceramic plate containing silicon nitride and YMgSi₂O₅N, Y₈Si₄N₄O₁₄ and Y₂Si₃O₃N₄, as defined in claim 1.

Since the maximum value of the content ratio of the YMgSi₂O₅N in the surface composition is suppressed below a predetermined value, the ceramic plate is excellent in insulation properties.

The reason for obtaining the effect as described is not necessarily clear, but the present inventors have speculated as follows. First, in the case of containing silicon dioxide, magnesium oxide, and yttrium oxide as a sintering auxiliary agent, a ceramic plate to be obtained contains YMgSi₂O₅N, Y₈Si₄N₄O₁₄, and Y₂Si₃O₃N₄.
Further, among YMgSi₂O₅N, Y₈Si₄N₄O₁₄, and Y₂Si₃O₃N₄, wettability of YMgSi₂O₅N with respect to silicon nitride is poorer than wettability of Y₈Si₄N₄O₁₄ and Y₂Si₃O₃N₄ with respect to silicon nitride, and in a case where YMgSi₂O₅N is contained in the ceramic plate, a grain boundary or the like may be formed between YMgSi₂O₅N and silicon nitride. The present inventors have speculated that, even when the grain boundary or the like is at a level that cannot be detected by observation using electron probe microanalyzer (EPMA) analysis and a scanning electron microscope (SEM), a decrease in dielectric breakdown voltage occurs. In other words, it can be said that the ceramic plate according to the present disclosure has been found by studying a new finding that YMgSi₂O₅N among compounds generated with use of a sintering auxiliary agent affects a decrease in dielectric breakdown voltage, and has been invented on the basis of this finding.

The above-described ceramic plate contains Y₈Si₄N₄O₁₄ and Y₂Si₃O₃N₄, and a total content ratio of the Y₈Si₄N₄O₁₄ and the Y₂Si₃O₃N₄ as determined by quantitative analysis of a surface composition using an X-ray diffraction method is less than 4.0% by mass on the basis of a total amount.

The above-described ceramic plate further contains Y₈Si₄N₄O₁₄ and Y₂Si₃O₃N₄, and a ratio of a total amount of the Y₈Si₄N₄O₁₄ and the Y₂Si₃O₃N₄ to a total amount of the YMgSi₂O₅N, the Y₈Si₄N₄O₁₄, and the Y₂Si₃O₃N₄ as determined by quantitative analysis of a surface composition using an X-ray diffraction method may be 0.250 or more. The above-described three types of silicon compounds may be contained in a ceramic plate produced using silicon dioxide, but by decreasing the ratio of YMgSi₂O₅N, which has relatively low wettability with silicon nitride, of these three types of silicon compounds, a decrease in dielectric breakdown voltage may be further suppressed.

An aspect of the present invention is a method for producing a ceramic plate as defined in claim 3.

In the method for producing a ceramic plate, by performing the heating treatment in specific conditions while using a sintering auxiliary agent containing silicon dioxide, a ceramic plate with a reduced content ratio of YMgSi₂O₅N may be produced.

### Advantageous Effects of Invention

According to the present invention, it is possible to provide a ceramic plate excellent in insulation properties and a method for producing the same.

### Brief Description of Drawings

FIG. 1 is an optical micrograph showing a part of a surface of a ceramic plate prepared in Example 1.
FIG. 2 is an optical micrograph showing a part of a surface of a ceramic plate prepared in Comparative Example 1.

### Description of Embodiments

Hereinafter, embodiments of the present disclosure will be described. However, the following embodiments are examples for describing the present invention and are not intended to limit the present disclosure to the following contents.

The materials exemplified in the present specification can be used singly or in combination of two or more kinds thereof unless otherwise specified. In a case where there are a plurality of substances corresponding to the respective components in a composition, the content of each of the components in the composition means a total amount of the plurality of substances existing in the composition unless otherwise specified. The term "step(s)" in the present specification may be independent steps from each other, or may be steps to be performed simultaneously.

An embodiment of a ceramic plate is a ceramic plate containing Y₈Si₄N₄O₁₄ and Y₂Si₃O₃N₄, in addition to silicon nitride and YMgSi₂O₅N. The ceramic plate contains silicon nitride as a main component, and is composed of only silicon nitride, YMgSi₂O₅N, Y₈Si₄N₄O₁₄, and Y₂Si₃O₃N₄.

In the ceramic plate, the silicon nitride includes β-silicon nitride as a main component. The silicon nitride may include α-silicon nitride, but preferably includes only β-silicon nitride. The content of β-silicon nitride in the silicon nitride may be, for example, 95% by mass or more or 98% by mass or more, or may be 100% by mass (this means that the entire silicon nitride is β-silicon nitride). In the ceramic plate, by sintering a raw material powder in the process of producing the ceramic plate, α-silicon nitride in the raw material powder is converted into β-silicon nitride. The content of α-silicon nitride may be reduced depending on sintering conditions and the like.

In the above-described ceramic plate, the maximum value of the content ratio of YMgSi₂O₅N as determined by quantitative analysis of a surface composition using an X-ray diffraction method is less than 8.0% by mass on the basis of the total amount. The maximum value of the content ratio of the YMgSi₂O₅N may be, for example, 7.9% by mass or less, 7.8% by mass or less, or 7.7% by mass or less. By setting the upper limit value of the maximum value of the content ratio of the YMgSi₂O₅N within the above range, the insulation properties of the ceramic plate may be further improved. The maximum value of the content ratio of the YMgSi₂O₅N as determined by quantitative analysis of a surface composition using an X-ray diffraction method is usually more than 7.4% by mass on the basis of the total amount, may be 7.5% by mass or more, or is generally about 7.6% by mass. The maximum value of the content ratio of the YMgSi₂O₅N can be adjusted within the above range, and may be, for example, 7.4% by mass or more and less than 8.0% by mass, 7.4 to 7.9% by mass, 7.4 to 7.8% by mass, 7.4 to 7.7% by mass, or 7.5 to 7.7% by mass. Note that, the total amount used as the standard means the total amount of components detected using the X-ray diffraction method.

The ceramic plate is produced by sintering a mixture which contains silicon nitride and a sintering auxiliary agent containing silicon dioxide. The ceramic plate further contains YMgSi₂O₅N, Y₈Si₄N₄O₁₄, and Y₂Si₃O₃N₄, in addition to silicon nitride.

The total content ratio of the Y₈Si₄N₄O₁₄ and the Y₂Si₃O₃N₄ as determined by quantitative analysis of a surface composition using an X-ray diffraction method is less than 4.0% by mass, for example 7% by mass or less, 3.5% by mass or less, or 3.0% by mass or less, on the basis of the total amount. A total content ratio of the Y₈Si₄N₄O₁₄ and the Y₂Si₃O₃N₄ is 0.5% by mass or more, for example 0.8% by mass or more, on the basis of the total amount.

The lower limit value of the ratio of the total amount of the Y₈Si₄N₄O₁₄ and the Y₂Si₃O₃N₄ to the total amount of the YMgSi₂O₅N, the Y₈Si₄N₄O₁₄, and the Y₂Si₃O₃N₄ as determined by quantitative analysis of a surface composition using an X-ray diffraction method may be, for example, 0.250 or more, 0.252 or more, 0.253 or more, or 0.255 or more. By setting the lower limit value of the ratio within the above range, a decrease in dielectric breakdown voltage may be further suppressed, and the insulation properties of the ceramic plate may be further improved. The upper limit value of the ratio may be, for example, 0.350 or less or 0.345 or less. The ratio can be adjusted within the above range, and may be, for example, 0.250 to 0.350, 0.253 to 0.345, or 0.255 to 0.345. The ratio can be adjusted, for example, according to the use amount of the sintering auxiliary agent used in the production of the ceramic plate, the composition ratio, conditions of the heating treatment of a green sheet, and the like.

The content ratio of each of the YMgSi₂O₅N, the Y₈Si₄N₄O₁₄, and the Y₂Si₃O₃N₄ in the present specification is determined by quantitative analysis using an X-ray diffraction method. Specifically, measurement is performed as follows. First, arbitrary 30 regions (regions having a size of 0.6 mm × 0.9 mm) in each of both main surface of the ceramic plate are measured, and a region in which the content ratio of YMgSi₂O₅N is maximized is determined from these 30 regions. The content ratio of YMgSi₂O₅N measured in the determined region is regarded as the maximum value of the content ratio of YMgSi₂O₅N. In the above-described region in which the content ratio of YMgSi₂O₅N is the maximum value, the content ratio of each of Y₈Si₄N₄O₁₄ and Y₂Si₃O₃N₄ is measured, and the total amount thereof is regarded as the total content ratio of Y₈Si₄N₄O₁₄ and Y₂Si₃O₃N₄. Further, the ratio of the total amount of the Y₈Si₄N₄O₁₄ and the Y₂Si₃O₃N₄ to the total amount of the YMgSi₂O₅N, Y₈Si₄N₄O₁₄, and Y₂Si₃O₃N₄ is determined from values calculated from the total amount of respective components measured in the above-described region in which the content ratio of YMgSi₂O₅N is the maximum value.

Note that, although depending on the thickness of the ceramic plate, in a case where the ceramic plate is thin (for example, about 0.3 mm), a place in which the YMgSi₂O₅N and the like exist can be relatively easily checked by observing the ceramic plate from the other main surface side in a state where the ceramic plate is irradiated with light from one main surface of the ceramic plate. That is, the place in which the YMgSi₂O₅N and the like exist has low light transmittance, and this place is observed to be black in the observation surface (the main surface opposite to the main surface irradiated with light) of the ceramic plate. By preferentially observing this place, the content of YMgSi₂O₅N and the like described above can be simply checked.

The above-described ceramic plate may be excellent in insulation properties. The dielectric breakdown voltage of the ceramic plate can be set, for example, to 9.0 kV or more, 9.5 kV or more, or 10.0 kV or more. The "dielectric breakdown voltage" in the present specification means a value measured by a compression tester according to the description of "Solid electrical insulating materials-Test methods for electric strength" in JIS C 2110-1:2016. As the compression tester, for example, "TOS-8700" (device name) manufactured by KIKUSUI ELECTRONICS CORPORATION, or the like can be used.

When the above-described ceramic plate has a specific composition in the main surface thereof, the ceramic plate is useful as a ceramic insulating plate. An electrical circuit including a metal layer, or the like is formed on one or both of the main surfaces of the ceramic plate or the insulating plate, and the ceramic plate or the insulating plate may be used as a circuit board. This insulating plate is particularly suitable for, for example, a circuit board for an inverter that is used in hybrid vehicles, electric vehicles, electric trains, industrial robots, and the like.

The above-described ceramic plate can be produced, for example, by a method as described below. An embodiment of a method for producing a ceramic plate includes a step of subjecting a green sheet containing silicon nitride, silicon dioxide, magnesium oxide, and yttrium oxide to a heating treatment.

As the green sheet, for example, those prepared by the following procedures may be used. The green sheet may be obtained, for example, by compression molding mixed powder containing silicon nitride and a sintering auxiliary agent and processing the mixed powder into a sheet shape, or may be obtained by preparing a slurry containing silicon nitride, a sintering auxiliary agent, and a solvent or a slurry containing silicon nitride, a sintering auxiliary agent, a binder, and a solvent, forming a coating film on a release film, and then peeling off the release film. In application of the slurry, for example, a doctor blade method, a calendering method, an extrusion method, or the like can be used. In the case of forming a green sheet using a slurry, the content of the solvent may be reduced in advance by heating the green sheet. The green sheet may be processed into a desired shape and size, for example, by cutting or the like.

The sintering auxiliary agent contains silicon dioxide (SiO₂), magnesium oxide (MgO), and yttrium oxide (Y₂O₃). The sintering auxiliary agent forms a liquid phase when the temperature reaches a sintering temperature. α-silicon nitride (a-SN) is dissolved in this liquid phase to be converted in β-silicon nitride (β-SN), so that the grain growth is promoted, thereby obtaining a ceramic plate.

In the producing method according to the invention, the content of the silicon dioxide is 0.90 parts by mass or more on the basis of the total amount of the green sheet. The content of the silicon dioxide may be, for example, 0.92 parts by mass or more, 0.93 parts by mass or more, or 0.95 parts by mass or more, on the basis of the total amount of the green sheet. The content of the silicon dioxide is 1.00 part by mass or less, for example 0.98 part by mass or less, or 0.96 part by mass or less, on the basis of the total amount of the green sheet.

The content of silicon dioxide in the present specification means the total amount of silicon dioxide added as a sintering auxiliary agent and silicon dioxide formed by oxidizing the surface of silicon nitride. The amount of oxygen containing silicon nitride means a value measured by an oxygen/nitrogen analyzer according to the description of "Methods for chemical analysis of fine silicon nitride powders for fine ceramics" in JIS R 1603:2007. As the oxygen/nitrogen analyzer, for example, "EMGA-920" (device name) manufactured by HORIBA, Ltd., or the like can be used.

In the heating treatment, the temperature increasing rate in a temperature range of lower than 1400°C may be appropriately adjusted. The temperature increasing rate in a temperature range of lower than 1400°C may be, for example, 1.5°C/min or more or 2.0°C/min or more. In a case where the green sheet contains a binder or the like, by setting the temperature increasing rate in a temperature range of lower than 1400°C within the above range, the binder in the green sheet may be sufficiently burned to sufficiently reduce the content of the binder. In the case of setting the temperature increasing rate to a larger value, the content of the binder in the green sheet may be reduced by maintaining the temperature at a temperature lower than 1400°C for a predetermined time period.

When the green sheet is heated to 1400 to 1800°C in the heating treatment, conversion of α-silicon nitride into β-silicon nitride and the grain growth of β-silicon nitride in the green sheet are promoted. In the above-described production method, the temperature increasing rate of the heating treatment in a temperature range of 1400 to 1800°C is 0.50°C/min or less.

The temperature increasing rate of the heating treatment in a temperature range of 1400 to 1800°C may be, for example, 0.47°C/min or less, 0.46°C/min or less, or 0.45°C/min or less. By setting the temperature increasing rate within the above range, the grain growth of β-silicon nitride may be more sufficiently promoted, and a ceramic plate having a denser structure may be obtained. The temperature increasing rate of the heating treatment in a temperature range of 1400 to 1800°C may be, for example, 0.40°C/min or more, 0.42°C/min or more, or 0.43°C/min or more. By setting the temperature increasing rate within the above range, a ceramic plate may be produced in a relatively short time, and thus a decrease in productivity may be sufficiently suppressed. The temperature increasing rate in a temperature range of 1400 to 1800°C may be adjusted within the above range, and may be, for example, 0.40 to 0.50°C/min, 0.42 to 0.47°C/min, or 0.43 to 0.46°C/min.

The heating treatment may be performed, for example, in a nitrogen atmosphere containing nitrogen, or may be performed in a nitrogen gas.

In the above-described production method, from the viewpoint of suppressing of sticking of the ceramic plate to a sintering furnace or the like, a setter may be used. As the setter, for example, commercially available sintered bodies may be used, and those prepared by a known method may be used. As the setter, for example, those configured by at least one selected from the group consisting of boron nitride, silicon carbide, alumina, zirconia, graphite, and the like are exemplified. Of these, a setter configured by boron nitride is suitably used since it has heat resistance and satisfactory cutting property.

In the above-described production method, a plurality of green sheets may be laminated and subjected to a heating treatment at the same time. In this case, in order to suppress adhesion between green sheets overlapping each other, a mold release material may be applied to the main surface of the green sheet. The mold release material may be, for example, ceramic powder such as boron nitride, graphite powder, and the like.

In the process of the heating treatment, the sintering auxiliary agent is exposed to a high temperature so as to be removed outside the system. However, at least a part of the sintering auxiliary agent remains as a by-product, which is generated through side reactions and the like represented by the following Reaction Formula (1) to Reaction Formula (3), in the ceramic plate. According to studies of the present inventors, in a case where the used amount of silicon dioxide is large, Reaction Formula (3) tends to be given priority over Reaction Formula (2).

Si₃N₄ + Y₂O₃ → Y₂Si₃O₃N₄ ··· Reaction Formula (1)

Si₃N₄ + SiO₂ + 4Y₂O₃ → Y₈Si₄N₄O₁₄ ··· Reaction Formula (2)

Si₃N₄ + 5SiO₂ + 4MgO + 2Y₂O₃ → 4YMgSi₂O₅N ··· Reaction Formula (3)

According to studies of the present inventors, among the above-described by-products, all of YMgSi₂O₅N, Y₂Si₃O₃N₄, and Y₈Si₄N₄O₁₄ have insulation properties, but the dielectric breakdown voltage of the ceramic plate tends to be further decreased in a case where YMgSi₂O₅N remains than in a case where Y₂Si₃O₃N₄ and Y₈Si₄N₄O₁₄ remain.

Hereinbefore, several embodiments have been described, but the present invention is not intended to be limited to the above-described embodiment and is defined in the appended claims.

### Examples

Hereinafter, the content of the present invention will be described in more detail with reference to Examples and Comparative Examples. However, the present invention is not limited to the

### following Examples.

### (Example 1)

### [Production of ceramic plate]

A mixture containing 91.4 parts by mass of silicon nitride, 1.0 part by mass of silicon dioxide (SiO₂), 6.0 parts by mass of magnesium oxide (MgO), and 1.6 parts by mass of yttrium oxide (Y₂O₃) was prepared in a container, and this mixture was subjected to a uniaxial pressing molding to produce a sheet-shaped molded body. Then, this molded body was punched using a cutting device to obtain 70 sheets of green sheets having a rectangular parallelepiped shape. The obtained green sheets were sandwiched by a pair of boron nitride setters (manufactured by Denka Company Limited, product name: NB-1000) to obtain a laminate in which two setters and 70 sheets of green sheets are laminated.

The laminate obtained as described above was left to stand inside a sintering furnace and subjected to a heating treatment in a nitrogen atmosphere to prepare a ceramic plate. Conditions of the heating treatment were set such that a temperature increasing rate (setting value) at 1400 to 1800°C was set to 0.45°C/min and a retention time at which the temperature reached 1800°C was set to 500 minutes. After the heating treatment, the temperature was allowed to decrease naturally to room temperature.

### (Example 2)

A ceramic plate was prepared in the same manner as in Example 1, except that the content of silicon dioxide was changed to 0.95 parts by mass.

### (Example 3)

A ceramic plate was prepared in the same manner as in Example 1, except that the content of silicon dioxide was changed to 0.90 parts by mass.

### (Example 4)

A ceramic plate was prepared in the same manner as in Example 1, except that the temperature increasing rate was changed to 0.47°C/min.

### (Example 5)

A ceramic plate was prepared in the same manner as in Example 1, except that the temperature increasing rate was changed to 0.50°C/min.

### (Comparative Example 1)

A ceramic plate was prepared in the same manner as in Example 1, except that the content of silicon dioxide was changed to 0.2 parts by mass.

### (Comparative Example 2)

A ceramic plate was prepared in the same manner as in Example 1, except that the temperature increasing rate was changed to 5.0°C/min.

### [Surface composition analysis using X-ray diffraction method]

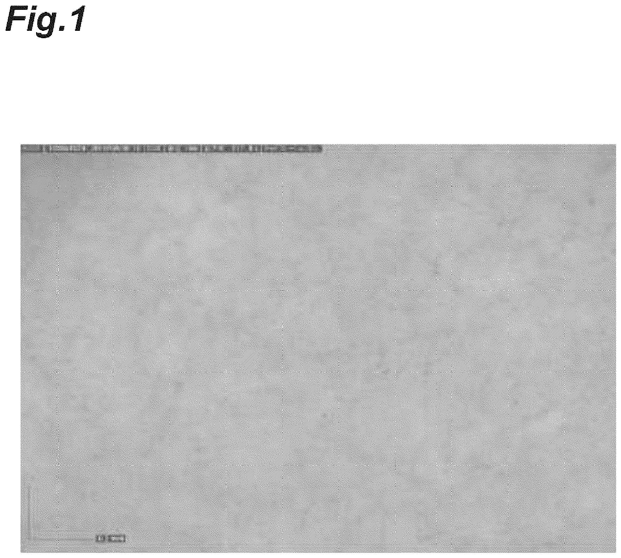

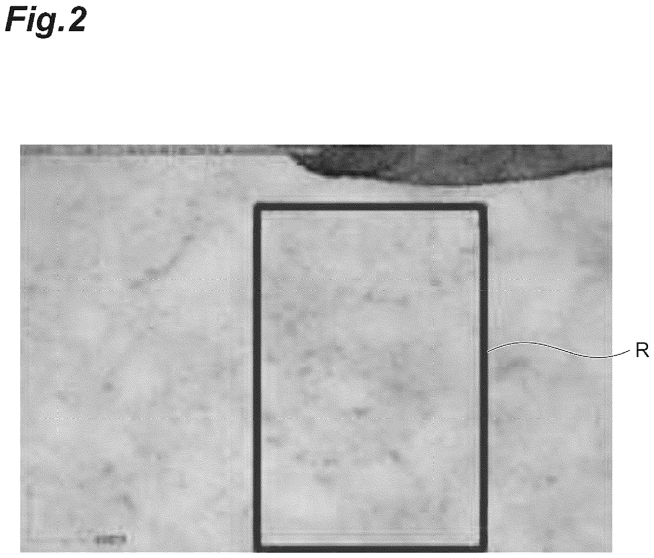

The surface observation with an optical microscope and the surface composition analysis using an X-ray diffraction method were performed for the ceramic plates prepared in Examples 1 to 5 and Comparative Examples 1 and 2. Results are shown in Table 1. For reference purposes, optical micrographs obtained by observing a part of the ceramic plate prepared in each of Example 1 and Comparative Example 1 are shown in FIG. 1 and FIG. 2, respectively. These optical micrographs are captured when the ceramic plate is irradiated with light from the main surface opposite to the observation surface of the ceramic plate and then observed. As shown in FIG. 2, in the ceramic plate prepared in Comparative Example 1, parts observed like shadow are observed in many places in the observation surface (the main surface opposite to the main surface irradiated with light). The region represented as R in FIG. 2 is an example of the observation region, and has a size of 0.6 mm × 0.9 mm.

**[Table 1]**

| | | Example 1 | Example 2 | Example 3 | Example 4 | Example 5 | Comparative Example 1 | Comparative Example 2 |
|---|---|---|---|---|---|---|---|---|
| Surface composition analysis of ceramic plate [% by mass] | β-SN | 89.21 | 89.71 | 89.10 | 88.66 | 88.64 | 86.33 | 85.25 |
| | YMgSi₂O₅N | 7.67 | 7.53 | 7.77 | 7.88 | 7.61 | 11.42 | 12.89 |
| | Y₈Si₄N₄O₁₄ | 2.24 | 1.67 | 2.21 | 2.34 | 2.75 | 1.81 | 1.48 |
| | Y₂Si₃O₃N₄ | 0.88 | 1.09 | 0.92 | 1.12 | 1.00 | 0.44 | 0.38 |
| {[Y₈Si₄N₄O₁₄] + [Y₂Si₃O₃N₄]}/{[YMgSi₂O₅N] + [Y₈Si₄N₄O₁₄] + [Y₂Si₃O₃N₄]} | | 0.28 | 0.26 | 0.28 | 0.30 | 0.33 | 0.16 | 0.12 |
| Dielectric breakdown voltage [kV] | | 10.9 | 11.1 | 10.4 | 10.6 | 10.5 | 8.86 | 8.53 |

### Industrial Applicability

According to the present disclosure, it is possible to provide a ceramic plate excellent in insulation properties and a method for producing the same. Furthermore, according to the method for producing a ceramic plate of the present disclosure, since a sintering auxiliary agent is used, a ceramic substrate excellent in insulation properties may be produced at a high yield rate while an increase in production cost is suppressed.

## Claims

1. A ceramic plate consisting of silicon nitride,YMgSi₂O₅N, Y₈Si₄N₄O₁₄ and Y₂Si₃O₃N₄ wherein
a maximum value of a content ratio of the YMgSi₂O₅N as determined by quantitative analysis of a surface composition using an X-ray diffraction method is less than 8.0% by mass on the basis of a total amount of components detected using the X-ray diffraction method,
a total content ratio of the Y₈Si₄N₄O₁₄ and the Y₂Si₃O₃N₄ as determined by quantitative analysis of a surface composition using an X-ray diffraction method is 0.5% by mass or more and less than 4.0% by mass on the basis of a total amount of components detected using the X-ray diffraction method,
a ratio of a total amount of the Y₈Si₄N₄O₁₄ and the Y₂Si₃O₃N₄ to a total amount of the YMgSi₂O₅N, the Y₈Si₄N₄O₁₄, and the Y₂Si₃O₃N₄ as determined by quantitative analysis of a surface composition using an X-ray diffraction method is 0.350 or less.

2. The ceramic plate according to claim 1, wherein
a ratio of a total amount of the Y₈Si₄N₄O₁₄ and the Y₂Si₃O₃N₄ to a total amount of the YMgSi₂O₅N, the Y₈Si₄N₄O₁₄, and the Y₂Si₃O₃N₄ as determined by quantitative analysis of a surface composition using an X-ray diffraction method is 0.250 or more.

3. A method for producing a ceramic plate according to claim 1 or 2, the method comprising a step of subjecting a green sheet containing silicon nitride, silicon dioxide, magnesium oxide, and yttrium oxide to a heating treatment at a temperature in a range of 1400 to 1800°C, wherein
a content of the silicon dioxide is 0.90 parts by mass or more and 1.00 part by mass or less on the basis of a total amount of the green sheet, and
a temperature increasing rate of the heating treatment from 1400 °C to the temperature is 0.50°C/min or less.

## Patentansprüche

1. Keramikplatte bestehend aus Siliziumnitrid, YMgSi₂O₅N, Y₈Si₄N₄O₁₄ und Y₂Si₃O₃N₄, worin
ein Maximalwert eines Gehaltsverhältnisses des YMgSi₂O₅N, bestimmt durch quantitative Analyse einer Oberflächenzusammensetzung unter Verwendung eines Röntgenbeugungsverfahrens, weniger als 8,0 Massen-% bezogen auf eine Gesamtmenge der Komponenten, nachgewiesen unter Verwendung des Röntgenbeugungsverfahrens, beträgt,
ein Gesamtgehaltsverhältnis des Y₈Si₄N₄O₁4 und des Y₂Si₃O₃N₄, bestimmt durch quantitative Analyse einer Oberflächenzusammensetzung unter Verwendung eines Röntgenbeugungsverfahrens, 0,5 Massen-% oder mehr und weniger als 4,0 Massen-% bezogen auf eine Gesamtmenge der Komponenten, nachgewiesen unter Verwendung des Röntgenbeugungsverfahrens, beträgt,
ein Verhältnis einer Gesamtmenge des Y₈Si₄N₄O₁₄ und des Y₂Si₃O₃N₄ zu einer Gesamtmenge des YMgSi₂O₅N, des Y₈Si₄N₄O₁₄ und des Y₂Si₃O₃N₄, bestimmt durch quantitative Analyse einer Oberflächenzusammensetzung unter Verwendung eines Röntgenbeugungsverfahrens, 0,350 oder weniger beträgt.

2. Keramikplatte gemäß Anspruch 1, worin
ein Verhältnis einer Gesamtmenge des Y₈Si₄N₄O₁₄ und des Y₂Si₃O₃N₄ zu einer Gesamtmenge des YMgSi₂O₅N, des Y₈Si₄N₄O₁₄ und des Y₂Si₃O₃N₄, bestimmt durch quantitative Analyse einer Oberflächenzusammensetzung unter Verwendung eines Röntgenbeugungsverfahrens, 0,250 oder mehr beträgt.

3. Verfahren zur Herstellung einer Keramikplatte gemäß Anspruch 1 oder 2, wobei das Verfahren einen Schritt umfasst, bei dem eine Grünfolie (green sheet), enthaltend Siliziumnitrid, Siliziumdioxid, Magnesiumoxid und Yttriumoxid, einer Wärmebehandlung bei einer Temperatur in einem Bereich von 1400 bis 1800°C unterzogen wird, worin
ein Gehalt des Siliziumdioxids 0,90 Massenteile oder mehr und 1,00 Massenteile oder weniger bezogen auf eine Gesamtmenge der Grünfolie beträgt, und
eine Temperaturerhöhungsrate der Wärmebehandlung von 1400°C auf die Temperatur 0,50°C/min oder weniger beträgt.

## Revendications

1. Plaque en céramique consistant en du nitrure de silicium, YMgSi₂O₅N, Y₈Si₄N₄O₁₄ et Y₂Si₃O₃N₄ dans laquelle
une valeur maximale d'un rapport de teneur du YMgSi₂O₅N telle que déterminée par l'analyse quantitative d'une composition de surface en utilisant un procédé de diffraction des rayons X est inférieure à 8,0 % en masse sur la base d'une quantité totale de composants détectés en utilisant le procédé de diffraction des rayons X,
un rapport de teneur totale du Y₈Si₄N₄O₁₄ et du Y₂Si₃O₃N₄ tel que déterminé par l'analyse quantitative d'une composition de surface en utilisant un procédé de diffraction des rayons X est de 0,5 % en masse ou plus et inférieur à 4,0 % en masse sur la base d'une quantité totale de composants détectés en utilisant le procédé de diffraction des rayons X,
un rapport d'une quantité totale du Y₈Si₄N₄O₁₄ et du Y₂Si₃O₃N₄ sur une quantité totale du YMgSi₂O₅N, du Y₈Si₄N₄O₁₄, et du Y₂Si₃O₃N₄ tel que déterminé par l'analyse quantitative d'une composition de surface en utilisant un procédé de diffraction des rayons X est de 0,350 ou moins.

2. Plaque en céramique selon la revendication 1, dans laquelle
un rapport d'une quantité totale du Y₈Si₄N₄O₁₄ and the Y₂Si₃O₃N₄ sur une quantité totale du YMgSi₂O₅N, du Y₈Si₄N₄O₁₄, et du Y₂Si₃O₃N₄ tel que déterminé par l'analyse quantitative d'une composition de surface en utilisant un procédé de diffraction des rayons X est de 0,250 ou plus.

3. Procédé de production d'une plaque en céramique selon la revendication 1 ou la revendication 2, le procédé comprenant une étape de soumission d'une feuille verte contenant du nitrure de silicium, du dioxyde de silicium, de l'oxyde de magnésium et de l'oxyde d'yttrium à un traitement thermique à une température dans une plage de 1 400 et 1 800 °C, dans lequel
une teneur en dioxyde de silicium est de 0,90 partie en masse ou plus et de 1,00 partie en masse ou moins sur la base d'une quantité totale de la feuille verte, et
une vitesse d'augmentation de température du traitement thermique à partir de 1 400 °C jusqu'à la température est de 0,50 °C/min ou moins.
